(19)

Europäisches
Patentamt
European
Patent Office
Office européen
des brevets

(11) **EP 2 503 379 A1**

(12) **EUROPEAN PATENT APPLICATION**

(43) Date of publication:
26.09.2012 Bulletin 2012/39

(51) Int Cl.:
**G02B 27/46** (2006.01)  **G06T 5/00** (2006.01)
**G06E 3/00** (2006.01)

(21) Application number: 11275051.8

(22) Date of filing: 28.03.2011

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 23.03.2011 GB 201104876

(71) Applicant: **MBDA UK LIMITED**
**Stevenage,**
**Hertfordshire SG1 2DA (GB)**

(72) Inventor: **The designation of the inventor has not yet been filed**

(74) Representative: **BAE SYSTEMS plc**
**Group IP Department**
**Farnborough Aerospace Centre**
**Farnborough**
**Hampshire GU14 6YU (GB)**

(54) **Optical processing method and apparatus**

(57)     A method of and apparatus for optically processing a source image is described with particular application in a two-pass joint transform correlator. A representation of a composite image, for example displayed on a spatial light modulator (2), is projected using coherent light (5) through optical apparatus (6) arranged to provide a Fourier transform of the composite image at an image detector (3). The composite image comprises the source image and a filter function image. Portions (2c) of the source image are interleaved with portions (2d) of the filter function image, and possibly also null portions (2b). Such interleaving may provide for spatial separation of a resulting image detected at a detector, for example after a second pass through the optical apparatus (6).

Fig. 6a

**Description**

Field of the Invention

The present invention concerns optical processing, coded mask imaging and imaging methods and apparatus relating thereto.

Background of the Invention

Coded Aperture Imaging (CAI) is a lens-less imaging method employed predominantly in astronomy to image wavelengths that cannot be manipulated with conventional optics, such as X-rays. The method is based upon the principle of the pinhole camera, with the primary difference being that the single pinhole aperture is replaced by an array of "pinholes". This increases the amount of light accepted into the system, though at the cost of producing a convolved image at the sensor plane based upon the shifted superposition of each of the pinhole apertures. The main limiting factor with CAI-based systems is in the reconstruction of the original scene from the convolved image, since the operation requires a significant degree of computer / digital processing time.

WO 2006/125975 describes a CAI imaging system, a schematic illustration of which is shown in Figure 1 of the accompanying drawings. A scene 101 is received at a coded aperture imaging (CAI) mask 102, resulting in a convolved image being detected by camera 103 (in the form of an array of detector pixels). The pattern of radiation detected by the camera requires decoding by means of a deconvolution algorithm. Such decoding is performed by a digital processing means (i.e. a computer) 104. The coded aperture imaging (CAI) mask 102 is in the form of a dynamically reconfigurable coded aperture imaging (CAI) mask and is thus able to be configured with different arrangements of apertures so as to extract different information from the scene, such as imaging the scene with a different field of view. The CAI imaging system of WO 2006/125975 requires the provision of a high speed digital processor in order to produce an image of the scene 101. Increasing the resolution of the image produced adds to the requirements of processing power to the extent that even the fastest of modern processors would not be fast enough to produce very high resolution images in real-time.

The present invention seeks to mitigate the above-mentioned problems. Alternatively or additionally, the present invention seeks to provide an improved imaging apparatus. Alternatively or additionally, the present invention seeks to provide an improved method of imaging. Alternatively or additionally, the present invention seeks to provide an apparatus or method with improved efficiency of processing a convolved or coded image for example of the type extracted by means of a CAI mask.

Summary of the Invention

In accordance with a first aspect of the invention there is provided an apparatus for processing of an image of a scene, wherein
the apparatus comprises
an encoding mask,
a detector associated with the encoding mask for sampling an image convolved by means of the encoding mask, the detector for example comprising a sensor array
optionally, a collimator arranged to act on the light incident on the detector (the collimator for example limiting the field of view of the beams reaching the detector)
associated with the encoding mask,
a decoding mask,
a coherent light source associated with the decoding mask, an image display unit associated with the decoding mask, and one or more optical apparatuses associated with the decoding mask, each of the encoding mask and the decoding mask comprising an arrangement of elements that filter incident images by altering the transverse spatial distribution of their amplitude and/or phase, the arrangement of the elements of the decoding mask being dependent on the arrangement of elements of the encoding mask,
the apparatus is arranged to received an image of the scene at the encoding mask,
the elements of the encoding mask are arranged to produce a convolution of the image of the scene and the encoding mask function, thus producing a convolved image which is detected by the detector associated with the encoding mask,
the image display unit is arranged to display the convolved image and to be illuminated by the coherent light source to produce a coherent radiation convolved image,
at least one of said one or more optical apparatuses is arranged to form, by an optical Fourier transform, an intermediate optical pattern derived from the coherent radiation convolved image and the arrangement of elements in the decoding mask; and

at least one of said one or more optical apparatuses is arranged to form optically an inverse Fourier transform of said intermediate optical pattern, thus producing an optically processed deconvolved image.

Such an apparatus can thus perform lens-less image-capture of a scene without the need for time consuming computer-processing of the image once captured. The apparatus of this aspect of the invention can be used to capture an image with the detector associated with the encoding mask without using any lenses. The image so captured may then be optically processed by means of an optical processing means comprising one or more optical apparatuses which may include one or more lenses. Such an apparatus could be used to significantly improve the speed at which imaging systems of the prior art extract useable images from lens-less systems, because the apparatus of the present invention utilises the inherent scalable parallel processing power of an optical system in contrast to the reliance on computer processing speeds of the prior art systems. It may be possible to construct an optical processing device for deconvolving a convolved image in accordance with the present invention that does not use one or more lenses in conjunction with the decoding mask. For example, Fourier transforming, if required, could be performed by other means.

The first aspect of the invention also provides a method of imaging a scene, wherein the method comprises the following steps:

providing an encoding mask and a decoding mask each mask comprising an arrangement of elements that filter incident images by altering the transverse spatial distribution of the amplitude and/or phase of the images,
using the encoding mask to produce a convolved image as a convolution of an image of a scene and an encoding mask function, and
decoding the convolved image so produced by optical processing, the optical processing including
reproducing said convolved image with coherent light, using the decoding mask in conjunction with an optical Fourier transform process to deconvolve the convolved image, the arrangement of elements of the decoding mask being dependent on the arrangement of elements of the encoding mask.

The method may include a step of subsequently reconfiguring *in situ* the mask or masks used to perform the encoding convolution with a different arrangement of elements. The encoding mask may then produce a second convolved image as a convolution of an image of a scene and a second mask function, the second mask function being different from the first mask function. The arrangement of elements of the mask or masks used to perform the deconvolution may also be reconfigured *in situ* in dependence on the arrangement of elements of the mask or masks used to perform the encoding convolution. Thus, by means of (re-)configuring the encoding mask with different arrangements of elements, different information can be extracted from the scene. By means of also being able to (re-)configure a decoding mask with a correspondingly different arrangements of elements, a representation of the original source image (of the scene) may be generated at speed and, if desired, locally to the encoding mask apparatus.

It has been appreciated that the first aspect of the invention may have application and advantage independent of the means by which the convolved image for subsequent processing is produced. For example, parts of the first aspect of the invention provide an optics-based image processing apparatus that could be used to process (for example deconvolve) convolved images that would have hitherto been processed by means of a digital computer or processor.

According to a second aspect of the invention there is provided an apparatus performing a deconvolution of an image which has been convolved with an encoding mask, said encoding mask having an arrangement of elements that filter incident images by altering the transverse spatial distribution of their amplitude and/or phase, the apparatus comprising:

a decoding mask having an arrangement of elements dependent on the arrangement of elements of the encoding mask,
first optical apparatus arranged to form, by an optical Fourier transform, an intermediate optical pattern derived from the convolved image and the arrangement of elements in the decoding mask; and
second optical apparatus arranged to form optically an inverse Fourier transform of said intermediate optical pattern.

An embodiment of the present invention thus provides an apparatus for performing a deconvolution of a convolved image, the apparatus including, in series, a decoding mask and one or more lenses (acting as the first and/or second optical Fourier transform apparatuses) to decode the convolved image, thus producing an optically processed deconvolved image.

It will be appreciated that the architecture of optical devices that are required in embodiments of this second aspect of the invention could be similar to those used to perform the function of an optical correlator. It will also be noted that the coded aperture imaging (CAI) mask as disclosed in WO 2006/125975 may be in the form of an array of binary switchable LCD elements, which could be suitable for use as the decoding mask of the present invention. Use of such LCD arrays have been proposed in other documents of the prior art for optical imaging techniques. For example, WO 99/31563, the contents of which are hereby incorporated by reference thereto, discloses the use of such an array as a spatial light modulator (SLM) in an optical correlator. Figure 2 of the accompanying drawings shows schematically a joint transform correlator of WO 99/31563. A reference image 201r and a source image 201s are digitised (in this case by means of a binary digitisation but it will be appreciated that the digitisation could be greyscale, depending on the SLM used) and displayed on the SLM 202. Collimated laser light is projected from a source 205 and is modulated by the liquid crystal pixels of the SLM 202. The two images are thus projected through the lens 206 which forms their Fourier transform in the back focal plane of the lens 206, where there is positioned the sensor array (in this case a CMOS or CCD camera sensor 203). The intensity of this Fourier distribution is thus captured detected by the detector 203 as a Fourier transformed joint power spectrum.

The image of the joint power spectrum is then processed by a computer 204 to produce a thresholded binary or greyscale image that is itself used to program the SLM to produce a further Fourier transformed correlation image with conjugate pairs of correlation peaks per match. It will however be appreciated that whilst there are similarities in the architecture employed, the correlator of WO 99/31563 is not arranged to perform a deconvolution of a convolved image resulting from an image of a scene being convolved by an encoding mask.

Various optional features of the second aspect of the invention will now be described.

The first and/or second optical apparatus may be arranged to perform the optical Fourier transform using a lens.

The apparatus may include an image-forming device arranged to produce a representation of the convolved image, such that the convolved image received at the first optical apparatus results from the representation so produced. The apparatus may include an image display unit. The image-forming device may for example comprise an image display unit. The apparatus may include a light source for illuminating the image display unit. The light source is preferably a coherent light source, such as laser light. The image display unit and the light source may together be arranged to produce and/or project a representation of an image displayed on the display unit, the optically processed deconvolved image produced by the apparatus resulting from the representation so produced. The image display unit may be arranged to display one or more of the convolved image, the decoding mask, the intermediate optical pattern, or an image derived from any of the foregoing.

The apparatus may be arranged to receive the convolved image of the scene electronically. For example, there may be a digital representation of the scene which is passed electronically to the apparatus, for example as digital signals or as a data array. The digital representation of the scene may then be displayed on the display unit.

The apparatus may be arranged to receive the convolved image as electromagnetic radiation, possibly as substantially collimated electromagnetic radiation.

The decoding mask may be in the form of a coded aperture imaging (CAI) mask. The decoding mask may be arranged to function by transmission of an image via apertures defined by the elements. The elements may be in the form of apertures. The apertures may alternatively be defined as the gaps between elements. The decoding mask may be arranged to function by reflection of an image. The elements may each be reflective. The decoding mask may be a fixed mask. The elements may each have a switchable state. The state of each element may be switchable between multiple states, for example providing variable reflectivity/transmissibility. The decoding mask may be a dynamically reconfigurable mask. For example, the arrangement of elements of the decoding mask may be able to be dynamically adapted thus allowing the apparatus to deconvolve images that have been convolved by means of encoding masks having different configurations of elements.

The decoding mask may comprise an array of independently switchable LCD pixels. The decoding mask may comprise an array of independently switchable mirror elements.

The decoding mask may be in the form of a spatial light modulating (SLM) unit. The decoding mask may be arranged to modulate the phase of the incident light. The decoding mask may be arranged to modulate the amplitude of the incident light.

The display unit may be arranged to function by defining the image by means of apertures defined by the elements. The elements may be in the form of apertures. The apertures may alternatively be defined as the gaps between elements. The display unit may be arranged to function by defining an image by means of reflection. The elements may each be reflective. The elements may each have a switchable state. The state of each element may be switchable between multiple states, for example providing variable pixel intensity.

The display unit may comprise an array of independently switchable LCD pixels. The display unit may comprise an array of independently switchable mirror elements.

The display unit may be in the form of a spatial light modulating (SLM) unit. The display unit may be arranged to modulate the phase of incident light. The display unit may be arranged to modulate the amplitude of incident light.

The apparatus may be arranged to operate by means of a two-pass process. The following description relates to features which are well suited to such an arrangement. It will be appreciated however that the features described below may have application in other configurations.

The apparatus may be so arranged that the decoding mask is applied to the convolved image and the optical Fourier transform is performed on the resulting masked convolved image. The apparatus may be so arranged that the optical Fourier transform is performed on a combination of the decoding mask and the convolved image. In this case, the decoding mask applied may define a mask function M', such that the encoding mask function M convolved with the mask function M' produces a delta function.

The display unit may perform the function of the decoding mask. The image display unit may be arranged to display a combination of the convolved image and a representation of the decoding mask. The representation of the decoding mask may thus act as a filter function in a correlation process. The image display unit and the decoding mask may be provided by a single device. The image display unit and the decoding mask may have components in common. For example, a spatial light modulator (SLM) may act both as the image display unit and provide the function of the decoding mask. The decoding mask may thus form a part only of a larger reconfigurable array of elements. For example, the afore-mentioned SLM may display the decoding mask, in the form of the filter pattern, alongside the convolution of the source image.

The apparatus may be arranged to optically process both the convolved image (from the source image) and the decoding mask filter function in parallel by means of performing a Fourier transform simultaneously with the same lens. The apparatus may comprise a joint transform correlator. The apparatus may have the architecture of a joint transform correlator.

The image display unit may be arranged to display a combination of the convolved image and the representation of the decoding mask such that portions of the convolved image are interleaved with portions of the decoding mask. Portions of at least one of the convolved image and the representation of the decoding mask may be interleaved with blanks. Elongate strips of the convolved image may be interleaved with elongate strips of the representation of the decoding mask.

The apparatus may further comprise an image detector for detecting the convolved image after it has been optically processed. The image detector may for example be arranged to detect the intermediate optical pattern formed by the first optical apparatus. The apparatus may further comprise a signal processor and an image-forming device. The image forming device may be arranged to display an image dependent on an image detected by the image detector. The signal processor may be arranged to receive from the detector the detected intermediate optical pattern and to supply it, or an image derived from it, to the image-forming device. The image forming device may be arranged to provide said intermediate optical pattern, or said derived image, to the second optical apparatus.

The first optical apparatus and the second optical apparatus may share at least one optical apparatus in common and may for example be one and the same optical apparatus. For example, the same optical apparatus may act as the first optical apparatus on a first pass, prior to the afore-mentioned signal processor receives from the detector the detected intermediate optical pattern, and the same optical apparatus may act as the second optical apparatus on a second pass, after the detected intermediate optical pattern, or the derived image, is supplied to the image-forming device

One and the same image-forming device may be used to produce a representation of the convolved image at the start of the first pass and to provide said intermediate optical pattern or said derived image, on the second pass. The image forming device may for example be arranged to be switchable between (i) a first mode in which it displays a combination of the convolved image and a representation of the decoding mask and (ii) a second mode in which it displays said intermediate optical pattern or said derived image.

For example, an image dependent on the joint power spectrum of the correlation performed in the first mode may be displayed on the image display unit and processed in the second mode. A digital processor, for example in the form of a computer processor, may process the result of the first mode of operation and in dependence thereon control the configuration of the display in the second mode of operation.

The image detector unit may, as mentioned above, comprise an array of sensor pixels, for example CCD elements, the pixels in the array each being arranged to measure the intensity of incident radiation. The image detector unit may also comprise a processing unit, the processing unit being arranged to generate a two-dimensional data representation of the image so detected. The processing unit may be arranged to generate the two-dimensional data representation by a process in which a data value is assigned to a pixel by comparing the intensity of radiation detected at that pixel with the intensity of radiation detected at a plurality of neighbouring pixels. The data value that is assigned to each such pixel may be one of a discrete number of possible values. The discrete number of possible values may be two (or may be more than two). The data value that is assigned to a pixel may depend on a comparison of the average intensity of radiation detected at that pixel with the average intensity of radiation detected at the neighbouring pixels. The four nearest neighbouring pixels may be used (apart of course from values assigned to pixels at the edge of the array). Alternatively, the eight nearest neighbouring pixels may be used.

The apparatus may be arranged to operate by means of a one-pass process. The following description relates to features which are well suited to such an arrangement. It will be appreciated however that the features described below may have application in other configurations.

The first optical apparatus may be arranged to perform the Fourier transform on the convolved image and then to apply the decoding mask to the resulting Fourier-transformed convolved image. In this case, the decoding mask applied may define the Fourier transform of a mask function M', such that the encoding mask function M convolved with the mask function M' produces a delta function. It will therefore be appreciated that the decoding mask pattern may not necessarily simply be the inverse of the encoding mask pattern.

The image display unit may be spatially separated from the decoding mask in the direction of the optical pathway. For example, a lens (for example the lens for performing the first Fourier transform on the convolved image) may be disposed between the image display unit and the decoding mask.

The apparatus may include a further lens for performing a further Fourier transformation of an image. There may therefore be first and second lenses, one of which is arranged to perform a Fourier transform on the convolved image before it is decoded by use of the decoding mask and the other of which is arranged to perform a Fourier transform on the convolved image after it is decoded by the decoding mask.

The decoding mask may be in for the form of SLM comprising switchable LCD elements. The decoding mask may be in the form of a filter pattern which is pre-calculated and based upon an inverse Fourier transform of the encoding mask pattern.

The apparatus may comprise a matched filter correlator. The apparatus may have the architecture of a matched filter correlator.

The apparatus may also include the encoding mask, which produces the convolved image for deconvolution. The encoding mask may share properties with the decoding mask. The encoding mask may be a dynamically reconfigurable encoding mask. The arrangement of elements of the mask may be dynamically adaptable thus allowing the apparatus to extract different information from the scene.

The apparatus may include an image detector unit associated with the encoding mask, the image detector unit capturing an encoded image. The image detector unit associated with the encoding mask is preferably arranged to digitise the convolved image for deconvolution.

The apparatus may include a collimator positioned in front of the image detector unit associated with the encoding mask, for example to limit crosstalk by restricting the angular field of light incident on the pixels of the camera / detector. The collimator may also be positioned in front of the encoding mask.

According to the second aspect of the invention there is also provided a method of deconvolving an image from an encoding mask with which it has been convolved, said encoding mask having an arrangement of elements that filter incident images by altering the transverse spatial distribution of the amplitude and/or phase of the images, wherein the method includes the steps of:

receiving the convolved image;
providing a decoding mask, the decoding mask having an arrangement of elements dependent upon the arrangement of elements in the encoding mask;
using an optical Fourier transform to form an intermediate optical pattern derived from the convolved image and the arrangement of elements in the decoding mask;
and performing an optical inverse Fourier transform on said intermediate optical pattern.

The method may be performed as a one-pass process. The method may be so performed that the optical Fourier transform is performed on the convolved image and the decoding mask is then applied to the resulting Fourier-transformed convolved image.

The method may be performed as a two-pass process. The method may be so performed that the decoding mask and the convolved image are optically combined before being subjected to the optical Fourier transform.

The optical Fourier transform may be performed with the use of one or more lenses. The optical inverse Fourier transform may be performed with the use of one or more lenses.

There is also provided a method of detecting an image, wherein the method includes
producing a convolved image of a scene by means of convolving electromagnetic radiation from the scene by means of an encoding mask,
and deconvolving the convolved image by means of performing a method of deconvolving according to the second aspect of the invention as described herein.

It has been appreciated that the first aspect of the invention may have application and advantage independent of the means by which the convolved and transformed image is subsequently processed. For example, parts of the first aspect of the invention provide an optics-based adaptable imaging apparatus that could be used to obtain a convolved image containing certain information from a scene, irrespective of how the convolved image is subsequently processed (i.e. whether by a digital processing unit, such as a computer, or by an optical processing apparatus as set out above in relation to the second aspect of the invention).

According to a third aspect of the invention, there is provided an apparatus for adaptive imaging of a scene, wherein
the apparatus comprises an image capture unit and an image processing unit, the image capture unit comprises
an encoding mask, the encoding mask having an arrangement of elements that filter incident images by altering the transverse spatial distribution of the amplitude and/or phase of the images (such that for example the encoding mask forms, on reflection or transmission of the image, a convolution of the image and a mask function, the mask function depending on the arrangement of elements), the elements of the encoding mask being arranged to produce a convolution of the image of the scene and the encoding mask function, and
an image detector for detecting a convolved image produced by the encoding mask,
the image processing unit comprises
an image-forming device which projects a representation of the convolved image by means of a coherent light source (for example in dependence on signals from the image detector),
and a decoding mask arranged to receive and decode the coherent light representation of the convolved image thus producing a deconvolved image providing information on the original scene,
at least some of the elements of the encoding mask are controllable such that the arrangement of elements of the mask is dynamically adaptable thus allowing the image capture unit of the apparatus to extract different information from the scene,
at least some of the elements of the decoding mask are controllable such that the arrangement of elements of the mask is dynamically adaptable thus allowing the decoding mask of the image processing unit to adapt dynamically in dependence on the particular arrangement of elements of the encoding mask of the image capture unit.

Thus, the apparatus according to embodiments of the third aspect of the invention may have the advantages of the imaging apparatus as set out in WO 2006/125975, and yet reduce the post-processing time by means of the provision of a decoding mask.

The image processor unit may include digital processing means for performing digital processing of a digitised version of the image. For example, the image could be Fourier transformed (or inverse Fourier transformed) by means of a digital processor. Alternatively, or additionally, the apparatus may include at least one lens arranged to produce a Fourier transformation of the convolved image.

The image capture unit may include a collimator arranged to act on the light incident on the image detector (the collimator for example limiting the field of view of the beams reaching the detector) associated with the encoding mask.

The image-forming device may include a coherent light source and an image display unit. The image display unit may for example be arranged to display the convolved image and to be illuminated by the coherent light source to produce the coherent light representation of the convolved image.

The apparatus may be arranged to receive an image of the scene as electromagnetic radiation. The apparatus is preferably arranged to capture the image of a real-life scene in real-time. The scene may be separated from the apparatus by a distance of more than 2 metres. The radiation that is incident on the encoding mask may thus be substantially collimated. The apparatus may be arranged to receive at the encoding mask electromagnetic radiation reflected from objects in the scene.

The third aspect of the invention also provides a method of imaging a scene, wherein the method comprises the following steps:

providing an encoding mask having an arrangement of elements that filter incident images by altering the transverse spatial distribution of the amplitude and/or phase of the images, the elements of the encoding mask being arranged to produce a convolution of the image of the scene and the encoding mask function
configuring the encoding mask with an arrangement of elements,
using the encoding mask to produce a first convolved image as a convolution of an image of a scene and a first mask function,
using an image processing unit comprising a decoding mask to produce a first deconvolved image,
the decoding mask having an arrangement of elements that filter incident images by altering the transverse spatial distribution of the amplitude and/or phase of the images (such that for example the decoding mask forms, on reflection or transmission of the image, a convolution of the image and a decoding mask function, the decoding mask function depending on the arrangement of elements),
subsequently reconfiguring *in situ* the encoding mask with a different arrangement of elements and reconfiguring *in situ* the decoding mask with a corresponding different arrangement of elements,
using the encoding mask to produce a second convolved image as a convolution of an image of a scene and a second mask function, the second mask function being different from the first mask function,
using the image processing unit comprising the reconfigured decoding mask to produce a second deconvolved image, whereby
by means of configuring the encoding mask with different arrangements of elements different information can be extracted from the scene.

The step of reconfiguring the encoding mask may be performed within 1/10th second of the step of configuring an encoding mask with an arrangement of elements.

The step of using the encoding mask to produce a first convolved image may include receiving at the encoding mask, as electromagnetic radiation, a real-time image of a real-life scene. The real-life scene may be separated from the encoding mask by a distance of more than 2 metres.

The image processing unit may comprise one or more optical devices arranged to optically Fourier transform images.

It has also been appreciated that the use of the image display unit to project a composite image such that portions of one image (in the aspects described above, the source image) are interleaved with portions of another image (in the aspects described above, the decoding mask) may have application in embodiments outside the scope of the second aspect of the invention described above. The interleaving of such images in an optical processing apparatus may have application and advantage independent of the use in a deconvolution process. There may for example be application in an optical correlator for comparing a source image against a reference image.

According to a fourth aspect of the invention, there is provided an apparatus for optically processing a source image, the apparatus comprising:

an image display unit for displaying a composite image comprising a source image and a filter function image,
a coherent light source for illuminating the image display unit, and
an image detector,
the image display unit and the coherent light source are together arranged to project a representation of the composite image onto the image detector, the image received at the image detector being in the form of an optically processed image, for example a correlation image,

wherein
the image display unit is arranged to display the composite image such that portions of the source image are interleaved with portions of the filter function image.

Preferably, the apparatus also includes an optical apparatus, for example comprising at least one lens, arranged to produce an optical Fourier transform of the composite image. The image display unit and the coherent light source may thus together be arranged to project a representation of the composite image via the optical apparatus onto the image detector, the image received at the image detector thus being a Fourier transform of the composite image. The apparatus being so arranged that the lens acts as a Fourier transform lens. For example, the image display unit and the coherent light source may together be arranged to project a representation of the composite image via the lens onto the image detector, the image received at the image detector being in the form of a Fourier transformed correlation image.

It will be seen that in this fourth aspect of the invention, the filter function image may be any image and need not be in the form of a decoding mask function. The filter function image could be in the form of an amplitude modifying function. The filter function image could be in the form of a phase modifying function. The filter function image could be in the form of a complex function, for example modifying both amplitude and phase.

The image display unit may be arranged to display the composite image such that portions of at least one of the source image and the filter function image are interleaved with nulls (for example blanks). The portions may be in the form of strips, for example elongate strips. The image may be formed (or defined by) an array of pixels. Each portion may be in the form of a collection of interconnected pixels. Each strip may have a constant width. The width of at least one strip may be a single pixel. The null strip may for example be one pixel wide. Substantially all of the null strips may be one pixel wide. Some or all of the null strips may have a width greater than one pixel. One, more or substantially all of the null strips may each be wider than the median width of the source image strip. One, more or substantially all of the null strips may each be wider than the median width of the filter function image strip. Alternatively, substantially all of the strips may have substantially the same width. Elongate strips of the source image may be interleaved with elongate strips of the filter function image. There is preferably a row of a multiplicity of successive spatially separated sets of elongate strips, each set comprising a first elongate strip of the source image and a second elongate strip of the filter function image and a third null strip disposed between the first and second strips. There may be a succession of equally spaced apart strips, such that the nth strip is an elongate strip of the source image, the (*n+1*)th strip is an elongate strip of the filter function image and the (*n+2*)th strip is an elongate null strip. It will be appreciated that the direction of counting the strips (i.e. from the nth strip to the (*n+1*)th strip may be in either direction (and could therefore be from right to left). Thus, if one considers the strips being arranged in successive sets of three available slots, the null strip may for example be considered as being placed in either the first, second or third slot. A row of a multiplicity of strips may for example be divided into slots or sets of strips, the sets or slots themselves being notionally divided as such. For example, the series ... SFN SFN SFN SFN... (having multiple sets of SFN) may be deemed as equivalent to ...S FNS FNS FNS FN ... (having multiple sets of FNS), where S, F, and N represent a source image strip, a filter function strip and a null strip, respectively. The strips may extend to touch the adjacent strip(s).

According to the fourth aspect of the invention, there is also provided a method of optically processing a source image, wherein the method comprises a step of projecting using coherent light a representation of a composite image (optionally through optical apparatus for example a lens arranged to provide a Fourier transform of the composite image) onto an image detector, the composite image comprising the source image and a filter function image, and wherein the image received at the image detector is in the form of a (optionally Fourier transformed) correlation image, and the composite image is so arranged such that portions of the source image are interleaved with portions of the filter function image.

The method may include a first pass process and a second pass process. The first pass process may include passing a representation of the composite image through optical apparatus, producing a Fourier transform of the composite image at the image detector as an intermediate image. The second pass process may include passing the intermediate image, or an image derived therefrom, through optical apparatus, producing an optically processed image at the image detector.

The image detector may comprise an array of sensor pixels. The method may include generating a two-dimensional data representation of an array of image pixels dependent on the intensity of incident radiation detected at the sensor pixels. The method may include assigning a data value to an image pixel by comparing the intensity of radiation detected at the sensor pixel corresponding to the image pixel with the intensity of radiation detected at a plurality of neighbouring pixels.

It will of course be appreciated that features described in relation to one aspect of the present invention may be incorporated into other aspects of the present invention. For example, the apparatus (and method) of the third aspect of the invention may incorporate any of the features described with reference to the apparatus (and method) of the second aspect of the invention and *vice versa*. The image display unit of the fourth aspect of the invention may have any of the features of the image display unit associated with the decoding mask of any of the first to third aspects of the invention. Similarly, the image detector of the fourth aspect of the invention may be arranged in the same way as, or have any of the features of, the image detector unit associated with the decoding mask of any of the first to third aspects of the invention.

Description of the Drawings

Embodiments of the present invention will now be described by way of example only with reference to the accompanying schematic drawings of which:

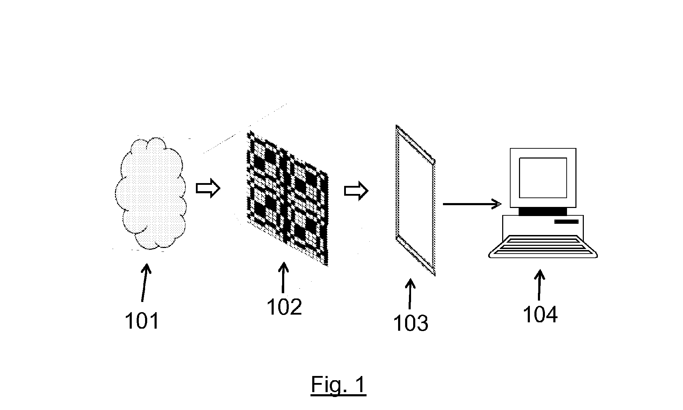

Figure 1 shows a coded aperture imaging apparatus of the prior art;

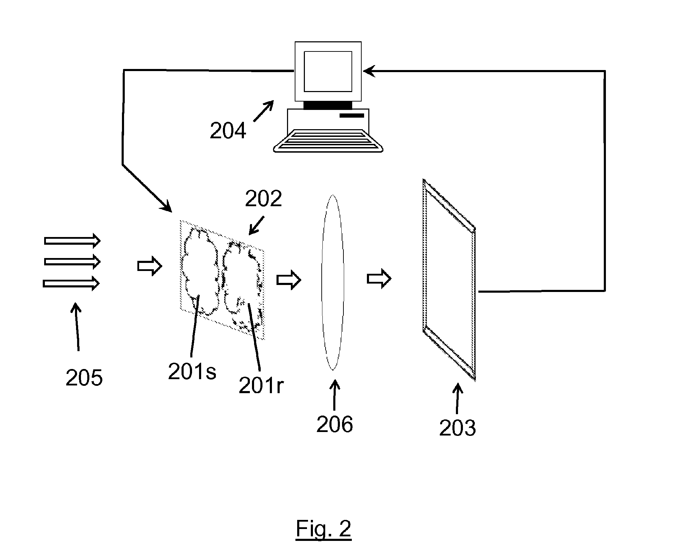

Figure 2 shows an optical correlation apparatus of the prior art;
Figure 3 shows an imaging system according to a first embodiment of the invention;
Figures 4a and 4b show a pair of Modified Uniform Redundant Array (MURA) patterns;
Figure 5a shows an image of a scene;
Figure 5b shows a convolved image resulting from a convolution of the image of Figure 5a and a mask function;
Figure 6a shows an imaging system according to a second embodiment of the invention operating in a first mode;
Figure 6b shows a face-on view of a reconfigurable mask forming part of the imaging system shown in Figure 6a;
Figure 6c shows an enlarged portion of the reconfigurable mask shown in Figure 6b;
Figure 7 shows an imaging system according to the second embodiment operating in a second mode;
Figure 8a shows an example of a joint transform correlator input image;
Figure 8b shows the convolution obtained from the input image of Figure 8a;
Figures 9a to 9c show the results of the image processing performed by the apparatus of the second embodiment;
Figures 10a and 10b illustrate the results of a thresholding algorithm used by the apparatus of the second embodiment;
Figures 11a shows an optical mask used in the first embodiment of the invention; and
Figures 11b shows the extracted and decoded image resulting from the use of the apparatus of the first embodiment.

Detailed Description

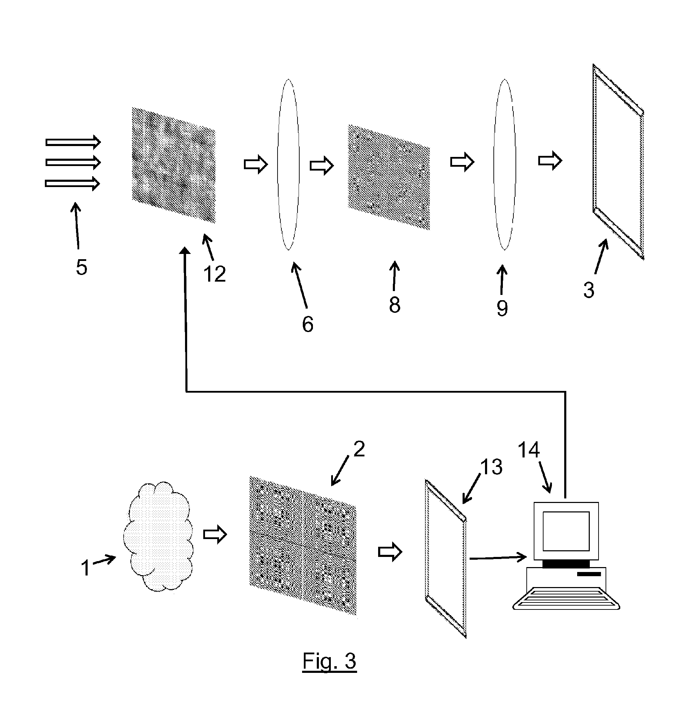

Apparatus according to a first embodiment of the invention is shown schematically by Figure 3. Light from an external scene 1 at a distance typically much greater than 2 metres from the apparatus, passes through a first encoding CAI mask 2 in series with a CCD array 13. The first encoding CAI mask 2 is in the form of a dynamically updatable liquid crystal Spatial Light Modulator (SLM). In practice the encoding mask comprises tiled repetitions of a mask pattern m to ensure that each pixel of the resulting encoded scene is formed from the full convolution of the external image with the encoding mask.

The resulting distribution is a convolution of the scene data with the pattern of the first encoding CAI mask:

$$s = i \otimes m = \iint_{\pm\infty} i(x,y)m(u-x,v-y)dxdy \qquad (1)$$

where:

> $s$ is the encoded/convolved image;
> $i$ is the original image
> $m$ represents the encoding mask function (encoding MURA pattern)
> $\otimes$ is the convolution operator

This convolution image is captured by the CCD array 13 and then converted into a digitised image by means of an image processor 14. To enable the scene data to be reconstructed from the convolution, the convolved image is decoded by means of a deconvolution process:

$$s \otimes m' = \iint_{\pm\infty} s(\eta,\sigma)m'(\omega - \eta, \upsilon - \sigma)d\eta d\sigma \qquad (2)$$

where:

> $m'$ represents the decoding mask function (decoding MURA pattern). A perfect reconstruction would yield:

$$i = s \otimes m' \qquad (3)$$

In the deconvolution/reconstruction stage of the process, a spectral operation consisting of the product of the Fourier transforms of the two functions, followed by an inverse Fourier transform, achieves the desired function:

$$s \otimes m' = IFT[S(u,v) \cdot M'(u,v)] \qquad (4)$$

where:

$$S(u,v) = FT[s(x,y)] = \iint_{\pm\infty} s(x,y)\exp[-i2\pi(ux+vy)]dxdy$$

$$M'(u,v) = FT[m(x,y)] = \iint_{\pm\infty} m(x,y)\exp[-i2\pi(ux+vy)]dxdy$$

In the example embodiment first described herein, this deconvolving process is performed by means of an optical processor having an architecture similar to that of a 4-f Matched Filter (MF) architecture, in which the correlation between an input and reference pattern is defined as the Fourier transform (FT) of the product of an input and conjugate reference function, $s$ and $r$, which have themselves been Fourier transformed (using the functions s and $m'$ as examples):

$$s * m' = \iint_{\pm\infty} s(x,y)m'^{*}(u-x,v-y)dxdy \qquad (5)$$

where:

> $m'^* =$ the conjugate of $m'$
> $*$ is the correlation operator.

The convolution operation differs from the correlation operation by one of the functions being 180 degree symmetrically rotated about its origin. Therefore by careful selection and arrangement of the input and decoding mask functions, the optical correlator architectures may be applied to produce the required convolution (though it should be noted that the $m'$ mask is inherently 180 degrees rotationally symmetrical).
In coherent optical processing, the two dimensional Optical Fourier Transform (OFT) of a collimated input distribution is formed at the rear focal plane of a positive converging lens. In the first embodiment, the Fourier transform/ inverse Fourier transform pair required are effected by the two lenses 6, 9, respectively.

The digitised image from the image processor 14 (the convolved image), is displayed as an encoded image on an SLM (spatial light modulator) 12. The SLM device used in this embodiment has an array of 1024x768 pixels with a 9 micron pitch.

Collimated, coherent light of wavelength $\lambda$ from a source 5 is used to illuminate the SLM 12, which modulates the light with the input function defined by the convolved image s(x,y). This input function is thus projected through the first FT lens 6, producing the optical Fourier transform of the convolved image at the pixels of a second SLM 8. At the second SLM 8, the FT of the convolved image is optically multiplied with a second filter pattern (the decoding mask). The pattern of the decoding mask is pre-calculated and based upon the Fast Fourier transform of the decoding pattern M' (which is such that M' $\otimes$ M is a delta function; M being the mask function effected by the CAI encoding mask 2). The pattern of the decoding mask may be represented as a complex function through the use of either a single SLM capable of providing the phase and amplitude modulation components, or by using two SLMs to provide the amplitude and phase components individually.

The multiplied distribution is then (inverse) Fourier transformed by a second lens 9 and the intensity of the resulting deconvolved image is finally captured in the focal plane of lens 9 by an image detector 3 comprising a sensor array. The sensor array is in the form of a CMOS sensor array having a 9.9 micron pitch, an array of 659x494 pixels, with each pixel having 12-bit sensitivity (i.e. ability to distinguish between 4096 different intensities of light).

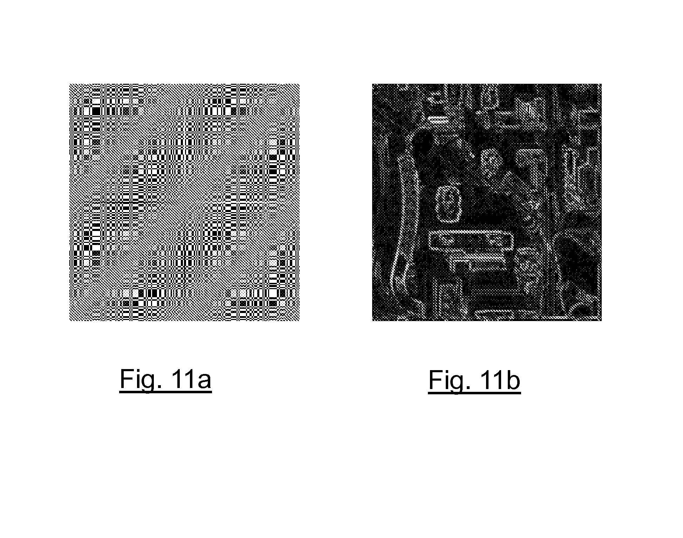

Figure 11 a shows an example filter pattern that may be displayed either in phase or amplitude on the decoding SLM 8. The filter was calculated from the imaginary part of the FFT of the M' pattern. Figure 11b shows the resulting reconstructed image. Above it is stated that the pattern of the decoding mask may be represented as a complex function. It should be noted however that the full complex representation is not essential as illustrated by Figures 11a and 11b.

The first encoding CAI mask 2 may be used as a fixed physical amplitude array. However, in this example, the SLM that defines the CAI mask 2 is reconfigurable. Thus, by using the SLM to display an array pattern in either amplitude or phase, the functionality of the system may be extended to include a changeable field of view and the ability to zoom in and out.

Use of optical processing to perform the deconvolution, rather than the electronic processing of the prior art, has the particular advantage that the speed of the processing does not decrease with increased resolution, as the OFT is calculated at the speed of light, regardless of the data resolution, using the inherent parallel nature of the optics. In practice this may be limited by the frame rates of the electro-optic devices used: typically a liquid crystal Spatial Light Modulator (SLM) to insert the pattern data and a fast CMOS or CCD sensor array to capture the resulting intensity distribution. Current megapixel SLM fame rates are in the region of 400Hz for greyscale nematic types and 3KHz for binary ferroelectric types. However it should be noted that other SLM types may also be used in place of the liquid crystal devices, such deformable micro-mirror arrays (MEMs).

Furthermore, the ability to use the SLM in phase mode has the added benefit of minimising the absorption losses associated with amplitude arrays, which increases the amount of light entering the apparatus. The phase representation of the encoding mask is calculated to form the intended aperture as a near field diffraction pattern. The field of view may be dynamically shifted by incorporating a phase ramp into the coded aperture pattern.

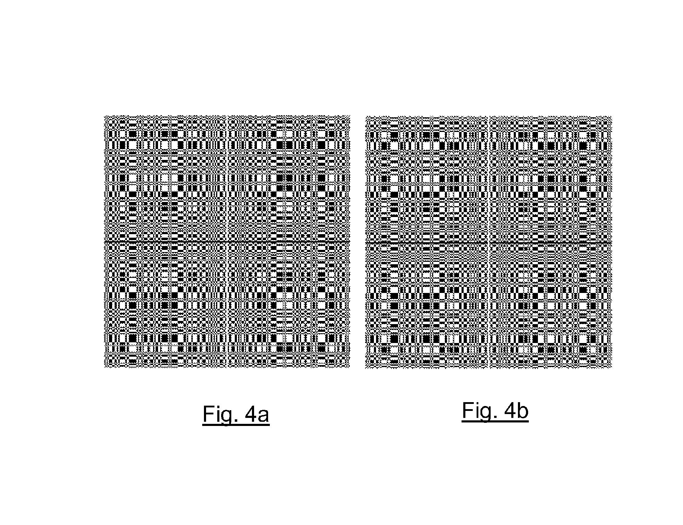

As mentioned above, the decoding pattern of the decoding CAI mask 8 is chosen such that the result of a convolution between (a) the inverse Fourier transform of the decoding mask pattern and (b) the encoding mask pattern is a delta function. Thus the decoding mask 8 shown in Figure 3 (the one-pass 4-f matched filter system) is based upon the FFT of the M' pattern. This provides the most accurate reconstruction of the original image. These aperture patterns are specifically calculated by known techniques, with the best known perhaps being those classed as Modified Uniform Redundant Array (MURA) patterns, symbolised as m (encoding) and *m*' (decoding). An example of a MURA pair is shown in Figures 4a and 4b, respectively.

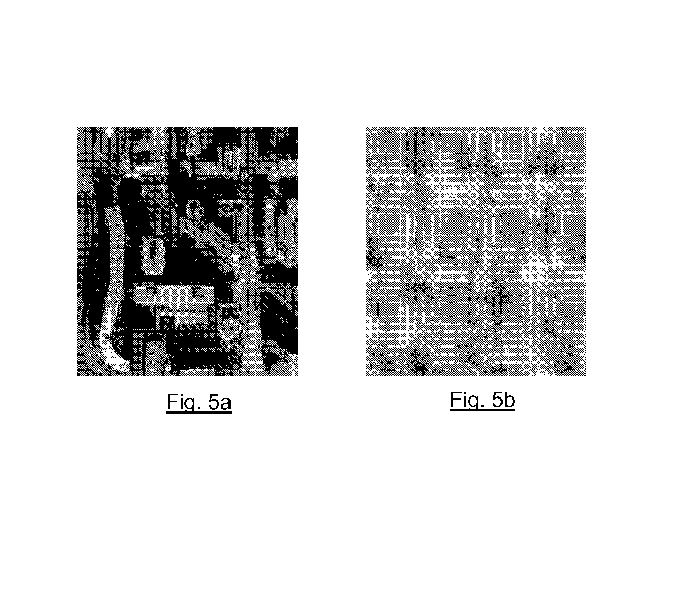

An example of a scene and the convolved image of that scene are shown in Figures 5a which shows an image of a scene (Figure 5a) and a convolved image of that scene (Figure 5b) of the type that would be used to configure the image projection effected by SLM 12.

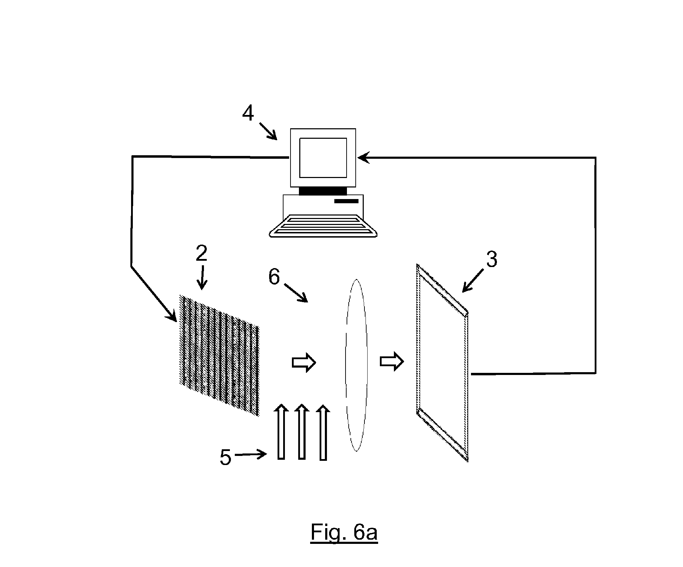

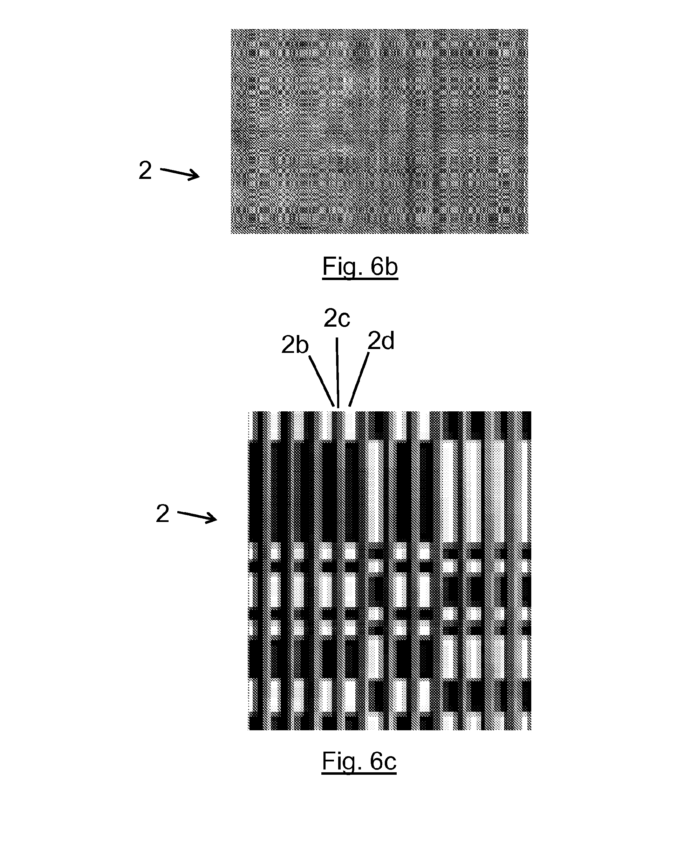

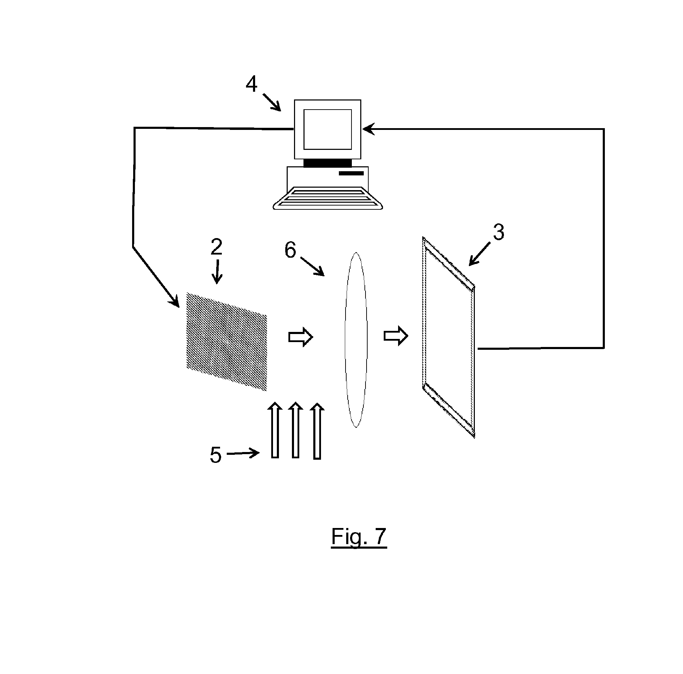

In a second embodiment, illustrated by Figures 6a to 7, an architecture similar to that of a 1/f Joint Transform Correlator (JTC) is employed. Figure 6a shows schematically the layout of the reflective SLM-based 1/f Joint Transform Correlator. Collimated coherent light of wavelength $\lambda$ from a source 5 is arranged (by position and/or one or more optical devices such as mirrors and beam splitters) to be incident on the SLM 2, which displays the input convolved source image *s(x,y)* and decoding mask function pattern *m'(x,y)* as spatially separated images (illustrated schematically in Figure 6a, and shown in greater and better detail in Figures 6b and 6c). The light is modulated by the SLM pixels and is focussed by the lens 6. The image detector array 3 is positioned at the rear focal plane of the lens, of focal length *f*, such that it captures the intensity distribution (square of the magnitude) of the Fourier transform of the input scene, known as the Joint Power Spectrum (JPS). The detector array then passes via a digital processing means 4 a digital representation of the JPS which is then displayed on the SLM 2 in a second pass (represented by Figure 7) whereupon it undergoes a further (inverse) Fourier transform by lens 6 allowing the detector array on this second pass to detect and capture the deconvolved image of the original scene.

Figure 6b shows the composite image, comprising the convolved source image *s(x,y)* and decoding mask function pattern *m'(x,y)*, in the form that they are displayed on the SLM 2 during the first pass. Figure 6c shows an enlarged portion of the composite image of Figure 6b. In the second embodiment, as can be seen from Figure 6c, the input *s(x,y)* and mask *m'(x,y)* images are presented as interleaved columns in the form of a row of elongate strips 2c, 2d. The reason for doing this can be explained by considering the conventional use of a Joint Transform Correlator arranged to correlate a source image with a reference image. Typically, an SLM would display the input *s(x,y)* and reference pattern data *m'(x,y)*, arranged such that they are spatially separated by distances ($-x_0/2$) and ($+x_0/2$) from the centre of the plane respectively and displayed in phase (or otherwise), to form an input scene:

$$s(x - x_0 / 2, y) + m'(x + x_0 / 2, y) \qquad (6)$$

The Joint Power Spectrum (JPS) thus produced would be:

$$\left| \frac{1}{\lambda f} S(u,v) \exp(-\pi j u x_0 / \lambda f) + \frac{1}{\lambda f} M'(u,v) \exp(+\pi j u x_0 / \lambda f]) \right|^2$$

$$= \frac{1}{\lambda^2 f^2} \left[ \begin{array}{l} \left\langle \left| S\left(\frac{u}{\lambda f}, \frac{v}{\lambda f}\right) \right|^2 + \left| M'\left(\frac{u}{\lambda f}, \frac{v}{\lambda f}\right) \right|^2 \right\rangle \\ + S^*(u,v)M'(u,v) \exp[-2\pi j u x_0 / \lambda f] \\ + M'^*(u,v)S(u,v) \exp[+2\pi j u x_0 / \lambda f] \end{array} \right] \qquad (7)$$

The JPS would then be processed and then displayed on the SLM for a second pass through the lens 6 to produce a final correlation scene at the sensor array. The final correlation scene would consist of terms relating to those featured in the right hand side of the above equation: the first term is a "zero order" noise term at the origin, whilst the second and third terms are pairs of 180 degree symmetrical conjugate peaks/spots whose intensity and positions denote the level of graphical similarity and relative alignment, respectively, of the input and reference functions.

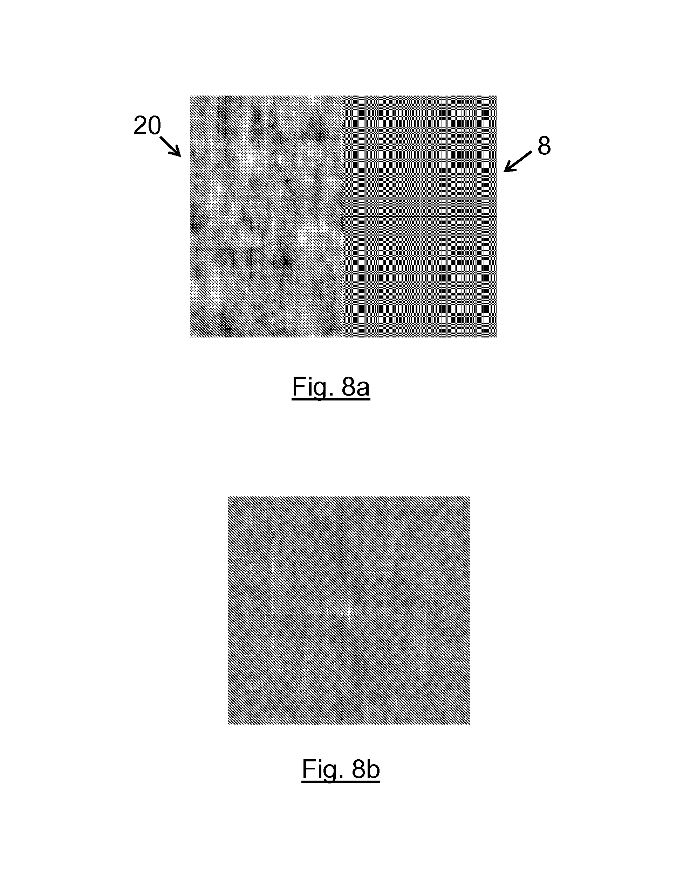

Thus it follows from the conventional use of a JTC for correlating images, that one possible method for producing a deconvolution with a JTC would be to arrange on the SLM 2 the convolved source image 20 and decoding mask function 8 side by side, as shown in Figure 8a, separated by a displacement vector. As described above, this results in an output consisting of a "zero order" term in the centre of the plane, plus two terms representing the cross-correlation between the input and reference patterns, rotated 180 degrees about the origin of the output plane. If the classical input arrangement (as shown in Figure 8a) is used, the resulting output will contain two overlaid reconstructed images, one rotated 180 degrees with respect to the other, as shown in Figure 8b. The interleaving of the convolved source image 20 and decoding mask function 8 in accordance with the second embodiment however enables the two images to be separated to reconstruct the original image.

It should be noted that in the MURA pattern implementation of the coded aperture system, the convolution is cyclic. This may be accounted for in the Fourier transform-based deconvolution by ensuring the size of the input is equal to the lateral dimensions of the imaging system. In order to separate the reconstructed image components in the output plane, the input plane as displayed on the SLM during the first pass is, in accordance with the second embodiment, reordered by interleaving the columns of the convolved object (columns 2c) and the decoding pattern (columns 2d) with at least one line of zeros (columns 2b) between them, as shown in Figure 6b. The explanation for this method is described thus, substituting the function variables used so far to explain the theory in general terms.

Consider the input to comprise of two functions that are sampled at one half of the sampling frequency of the input plane, having successive separations of one sampling interval. The interaction between these two objects can be analysed in Fourier space in the Joint Power Spectrum (JPS), where a general representation of their form is given by $|\Psi + \beta \cdot \Phi|^2$, the input argument of the Fourier operator:

$$\zeta = \Im\left(|\Psi + \beta \cdot \Phi|^2\right)$$
$$= \Im\left(|\Psi|^2\right) + \Im\left(|\Phi|^2\right) + \Im\left(\Psi \cdot \beta^* \cdot \Phi^*\right) + \Im\left(\Psi^* \cdot \beta \cdot \Phi\right) \qquad (8)$$
$$= [\psi * \psi](x) + [\varphi * \varphi](x) + [\psi * \varphi](x - \varepsilon_\beta) + [\varphi * \psi](x + \varepsilon_\beta)$$

where

$\Psi = \Im(\psi)$
$\Phi = \Im(\varphi)$
$|\beta|^2 = 1$
$* =$ the correlation operator.

If we set $\varepsilon_\beta = 1$, the three components are separated by unit shift of the sampling interval at the output plane. For independent retrieval to be possible the sampling of $\psi$ and $\varphi$ be should be such that the shift does not result in overlap among the three shifted terms in equation (8). This means that $\psi$ and $\varphi$ should be sampled at 3 times the minimum sampling interval where the multiplication of $\Phi$ by $\beta$ in the Fourier space is implemented by shifting $\varphi$ with respect to $\psi$ by at least one sampling interval (Fourier shift theorem, i.e. $\beta = e^{I(2\pi k/3N)}$) at the input plane. The form of $\beta$ over the intermediate (JPS plane) and the corresponding information expression are shown below:

| $\beta_0 = e^{I(2\pi k/3N)}$ | $\beta_1 = e^{I(2\pi/3)}\beta_0$ | $\beta_2 = e^{-I(2\pi/3)}\beta_1$ |
|---|---|---|
| $Z_0 = \beta_0 (\Phi + \beta_0\Psi)$ | $Z_1 = \beta_1 (\Phi + \beta_1\Psi)$ | $Z_2 = \beta_2 (\Phi + \beta_2\Psi)$ |
| Region - 0 : $1 \leq k_x \leq N$ | Region - 1: $N < k_x \leq 2N$ | Region - 2: $2N < k_x \leq 3N$ |

The corresponding input object ($\xi$) is given by

$$\xi[3n] = \psi[n]$$
$$\xi[3n-1] = \varphi[n] \qquad (9)$$
$$\xi[3n-2] = 0$$

With the mapping of $\psi$ and $\varphi$ to the input object ($\xi$), the output plane contains the desired correlation terms. The components of the correlation can be recovered with the mapping below:

$$\left(\psi * \psi + \varphi * \varphi\right)[n] \leftarrow \zeta[3n]$$
$$\left(\psi * \varphi\right)[n] \qquad \leftarrow \zeta[3n-1] \qquad (10)$$
$$\left(\varphi * \psi\right)[n] \qquad \leftarrow \zeta[3n+1]$$

Deconvolution of the CAI encoded image can thus be implemented by replacing $\psi$ with the recorded convolved data, $s(x,y)$ and $\varphi$ by the decoding pattern $m'(x,y)$. Preliminary results show that this technique is robust to noise and background subtraction. It can also be easily realised in an optical (JTC) setup since the negative value of -1 in the decoding pattern can be replaced by zeros (i.e. a null or blank pattern) without affecting the quality of the recovered image.
Thus, returning to the description of this embodiment with reference to Figures 6a to 7, the interleaved image on the SLM shown in Figures 6b and 6c gives rise to a JPS that is detected by the detector 3 and then electronically processed by a digital processing circuit 4 (which may be in the form of a computer or a bespoke digital processing circuit). The resulting pattern is then displayed on the SLM 2 as shown in Figure 7 during the second pass. A second, inverse, optical Fourier transform process then produces the final deconvolved at the sensor array 3 as a second pass process using the same apparatus. The final image actually received at the sensor array 3 is in the form of a striped pattern, with the three component output images being interleaved with each other. The final image is digitally processed by the processor 4 to reconstruct the source image.

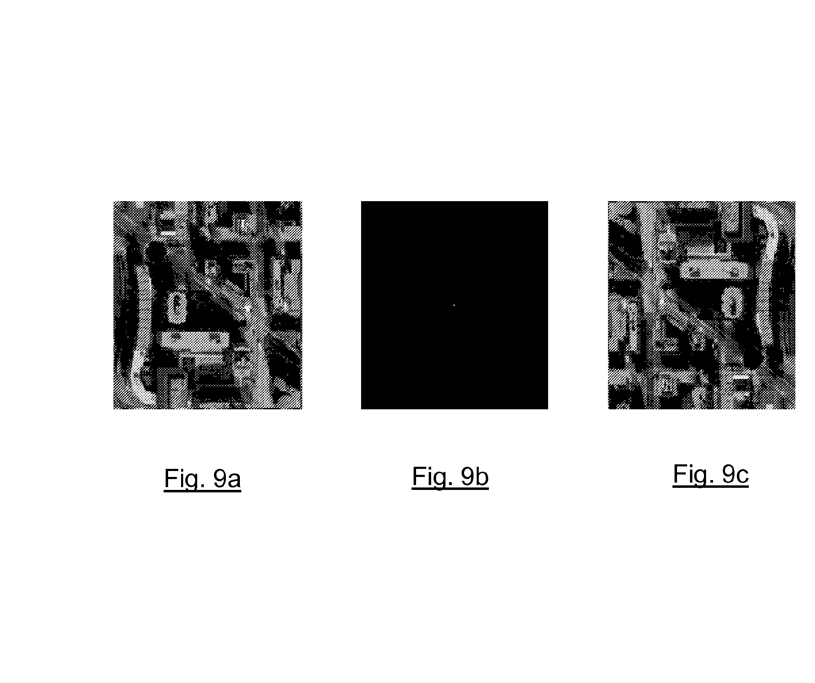

The results of the JTC-based process are shown in Figures 9a to 9c, decoupled from the resulting output plane and reconstructed by the processor 4. Thus, Figures 9a and 9c show the reconstructed input scene and its rotated self, whilst 9b shows the DC noise term.

The second embodiment utilises additional image processing techniques to mitigate against the physical limitations of the hardware used in the JTC architecture, in particular the fact that the CMOS/CCD sensor array 3 will not capture phase information from the Fourier transformed convolved scene incident upon it (detected as the Joint Power Spectrum). The CMOS/CCD sensor array 3 positioned in the Fourier plane will also be limited in its dynamic range sensitivity when capturing the Fourier spectrum data of the Joint Power Spectrum - whose dynamic range will be several orders of magnitude greater than that of the sensor. However, tests have shown that this is not a significant problem due to the fact the majority of the spectral data is contained with a much smaller range, located away from the central DC term. The use of a physical aperture stop placed at the origin of the plane, plus setting a high camera gain has been shown to allow the system to operate with a low camera exposure time.

A further consideration is the possible disparity between the camera output bit depth and the SLM bit depth. If SLM bit depth is considerably lower than that of the camera, an adaptive thresholding algorithm may be applied electronically (e.g. in processor 4) to the JPS to preserve as much of the information as possible before being displayed on the SLM for the inverse Fourier transform stage (second pass) of the process. One such algorithm that has been shown to be highly effective at extracting the spectral data from the JPS is a 3x3 nearest neighbour kernel, of the type described in PCT publication No. WO99/31563. This produces a binary image which is of particular use if, for example, a high speed ferroelectric binary SLM is being used in the inverse FT part of the deconvolution stage, plus it has the added benefit of producing a good balance of black (0 or -1 in phase) and white (+1) pixels which minimises the noise term present in the Fourier plane. The algorithm is of the form below. Each pixel in turn is set to either logical 1 or 0 (or -1 if displayed in phase) if its original value is greater than the average of its neighbouring pixels:

$$q(x,y) = \begin{cases} 1 \text{ if } p(x,y) > \begin{pmatrix} p(x-1,y-1) + p(x,y-1) + p(x+1,y-1) \\ + p(x-1,y) + p(x+1,y) \\ + p(x-1,y+1) + p(x,y+1) + p(x+1,y+1) \end{pmatrix} \\ \\ 0 \text{ otherwise} \end{cases}$$

where

$p(x,y)$ is the original greyscale function

$q(x,y)$ is the resulting binary function

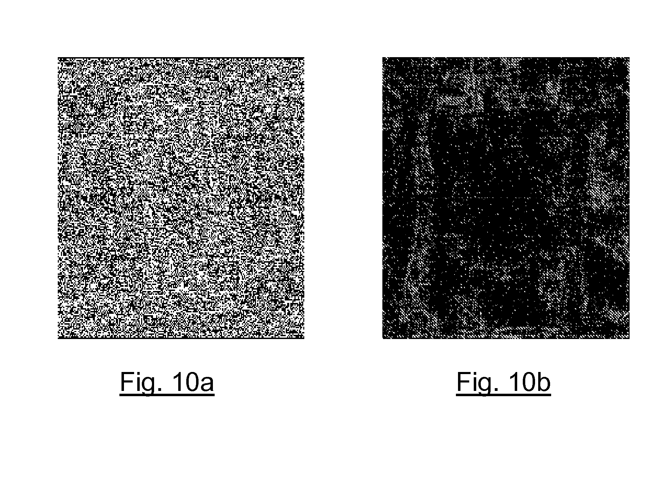

Figure 10a shows the results of applying the algorithm to the JPS produced from the first pass though the apparatus of Figure 6a using as a source the image shown in Figure 5a. Figure 10b shows the resulting image reconstruction following decoding and transforming after the second pass.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The first encoding mask (the CAI mask 2 shown in Figure 3 for example) could be a fixed pattern mask. The masks could be formed as micro-mirror arrays instead of LCD arrays.

The second SLM 8 shown in Figure 3 may be lower resolution than that of the SLM 2 used to display the source image. The decoding mask may require a resolution of only 201x201 elements for example.

The use of interleaving when using the JTC architecture may have application in other optical processing applications. For example, the interleaving of images / mask functions may be used in an optical correlator. The interleaving of images / mask functions may be used in an optical processor, having a JTC architecture, to enable spatial separation of the results of a two pass optical process that might otherwise be performed by an optical processor having a 4-f matched filter architecture. For example, the interleaving of images / mask functions may be used in an optical processor of a JTC architecture used to calculate or evaluate derivatives or partial derivatives as an optical differentiator using the optical processes described in WO 2008/110779, the contents of which are hereby incorporated by reference thereto, but using a JTC architecture, instead of a 4-f matched filter architecture.

The use of a dynamically reconfigurable decoding mask in conjunction with a dynamically reconfigurable encoding mask may have application independent of the particular optical processing architectures and arranged shown in the drawings.

The parts of the illustrated apparatus that perform the function of an optical processor (for example, those parts downstream of, and excluding, the encoding mask and the detector associated with the encoding mask) may have independent application. For example, such parts could be used to optically process data obtained by other means, for example, by means of an image capture apparatus that is physically separate to, and independent of, such parts.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

**Claims**

1. Apparatus for optically processing a source image, the apparatus comprising:

    an image display unit for displaying a composite image comprising a source image and a filter function image, a coherent light source for illuminating the image display unit,
    optical apparatus arranged to produce an optical Fourier transform of the composite image, and
    an image detector,
    the image display unit and the coherent light source being together arranged to project a representation of the composite image via the optical apparatus onto the image detector, the image received at the image detector thus being a Fourier transform of the composite image, and wherein
    the image display unit is arranged to display the composite image such that portions of the source image are interleaved with portions of the filter function image.

2. Apparatus according to claim 1, wherein
    the image display unit is arranged to display the composite image such that portions of at least one of the source image and the filter function image are interleaved with blanks and
    the image display unit is arranged to display the composite image such that elongate strips of the source image are interleaved with elongate strips of the filter function image.

3. Apparatus according to any preceding claim, wherein the image display unit is arranged to display the composite image such that there is a row of a multiplicity of successive spatially separated sets of elongate strips, each set comprising a first elongate strip of the source image and a second elongate strip of the filter function image and a third null strip disposed between the first and second strips.

4. Apparatus according to any preceding claim, wherein the image display unit comprises an array of elements arranged such that certain portions of the image display unit transmit or reflect an incident image whilst other portions do not.

5. Apparatus according to any preceding claim, wherein the image display unit comprises an array of elements, each element being able to transmit or reflect a proportion of incident radiation, the proportion transmitted or reflected being controllably variable to one of at least a multiplicity of selectable proportions.

6. Apparatus according to any preceding claim, wherein the image display unit comprises an array of independently switchable LCD pixels and/or comprises an array of independently switchable mirror elements.

7. Apparatus according to any preceding claim, wherein the image display unit is a spatial light modulator.

8. Apparatus according to any preceding claim, wherein the image display unit is also arranged to display an image dependent on an image detected by the image detector.

9. Apparatus according to claim 8, wherein the image display unit is arranged to be switchable between (i) a first mode in which it displays the composite image and (ii) a second mode in which it displays the image dependent on the image detected by the image detector during the first mode.

**10.** Apparatus according to any preceding claim, wherein the image detector comprises an array of sensor pixels and a processing unit, the sensor pixels in the array each being arranged to measure the intensity of incident radiation and the processing unit being arranged to generate a two-dimensional data representation of the detected image, the generation by the processing unit of the two-dimensional data representation including assigning a data value to a pixel by comparing the intensity of radiation detected at the sensor pixel with the intensity of radiation detected at a plurality of neighbouring pixels.

**11.** Apparatus according to any preceding claim, wherein the optical apparatus is a lens.

**12.** A method of optically processing a source image, wherein the method comprise a step of projecting using coherent light a representation of a composite image through optical apparatus arranged to provide a Fourier transform of the composite image at an image detector, the composite image comprising the source image and a filter function image, and wherein
the composite image is arranged such that portions of the source image are interleaved with portions of the filter function image.

**13.** A method according to claim 12, wherein the composite image includes a row of a multiplicity of successive spatially separated sets of elongate strips, each set comprising a first elongate strip of the source image and a second elongate strip of the filter function image and a third null strip disposed between the first and second strips.

**14.** A method according to claim 12 or claim 13, wherein the method includes
a first pass process during which the representation of the composite image is passed through the optical apparatus, the resulting Fourier transform of the composite image being detected at the image detector as an intermediate image, and
a second pass process during which the intermediate image, or an image derived therefrom, is passed through the optical apparatus, the resulting image being detected at the image detector.

**15.** A method according to any of claims 12 to 14, wherein the image detector comprises an array of sensor pixels and the method includes generating a two-dimensional data representation of an array of image pixels dependent on the intensity of incident radiation detected at the sensor pixels by
assigning a data value to an image pixel by comparing the intensity of radiation detected at the sensor pixel corresponding to the image pixel with the intensity of radiation detected at a plurality of neighbouring pixels.

101   102   103   104

Fig. 1

**204**

**202**

**205**

**201s**

**201r**

**206**

**203**

Fig. 2

Fig. 3

Fig. 4a

Fig. 4b

Fig. 5a

Fig. 5b

Fig. 6a

$2 \longrightarrow$

Fig. 6b

2c

2b 2d

$2 \longrightarrow$

Fig. 6c

Fig. 7

Fig. 8a

Fig. 8b

Fig. 9c

Fig. 9b

Fig. 9a

Fig. 10a

Fig. 10b

Fig. 11a

Fig. 11b

Europäisches
Patentamt

European
Patent Office

Office européen
des brevets

# EUROPEAN SEARCH REPORT

Application Number

EP 11 27 5051

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 681 519 A (LARSEN ARTHUR BERTEL ET AL) 1 August 1972 (1972-08-01)<br>* column 1, lines 5-8 *<br>* column 3, lines 7-16 *<br>* column 3, lines 65-68 *<br>* column 4, lines 1-3 *<br>* figure 1 * | 1-15 | INV.<br>G02B27/46<br>G06T5/00<br>G06E3/00 |
| A | US 5 111 515 A (JAVIDI BAHRAM [US]) 5 May 1992 (1992-05-05)<br>* the whole document * | 1-15 | |
| A | JANSCHEK K ET AL: "Integrated camera motion compensation by real-time image motion tracking and image deconvolution", ADVANCED INTELLIGENT MECHATRONICS. PROCEEDINGS, 2005 IEEE/ASME INTERNA TIONAL CONFERENCE ON MONTEREY, CA JULY 24-28, 2005, PISCATAWAY, NJ, USA,IEEE, 24 July 2005 (2005-07-24), pages 1437-1444, XP010837963, ISBN: 978-0-7803-9047-8<br>* the whole document * | 1-15 | |

TECHNICAL FIELDS
SEARCHED    (IPC)

G02B
G06T
G06E

The present search report has been drawn up for all claims

| Place of search | Date of completion of the search | Examiner |
|---|---|---|
| Munich | 23 May 2011 | Denise, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 503 379 A1**

## ANNEX TO THE EUROPEAN SEARCH REPORT
## ON EUROPEAN PATENT APPLICATION NO.

EP 11 27 5051

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2011

| Patent document cited in search report | | Publication date | Patent family member(s) | | Publication date |
|---|---|---|---|---|---|
| US 3681519 | A | 01-08-1972 | CA | 944060 A1 | 19-03-1974 |
| | | | DE | 2163443 A1 | 13-07-1972 |
| | | | GB | 1376907 A | 11-12-1974 |
| | | | NL | 7117287 A | 23-06-1972 |
| | | | SE | 364845 B | 04-03-1974 |
| US 5111515 | A | 05-05-1992 | NONE | | |

EPO FORM P0459

For more details about this annex : see Official Journal of the European Patent Office, No. 12/82

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006125975 A
- WO 9931563 A
- WO 2008110779 A